# EUROPEAN PATENT APPLICATION

(11) **EP 4 838 642 A1**
(43) Date of publication of application: **11.11.2026**
(21) Application number: 26177241.2
(22) Date of filing: 07.05.2026
(51) Int. Cl.: H01M 50/105, B32B 7/12, B32B 15/085, B32B 15/088, B32B 15/09, B32B 15/20, B32B 27/32, B32B 27/34, B32B 27/36, H01M 50/119, H01M 50/121, H01M 50/122, H01M 50/129, H01M 50/14

(54) **POUCH FILM FOR SECONDARY BATTERY AND SECONDARY BATTERY INCLUDING THE SAME**

(30) Priority: 07.05.2025 KR 20250059187
(71) Applicant: SK On Co., Ltd., Seoul 03161 (KR)
(72) Inventor: CHAE, Su Ung, 34124 Daejeon (KR); KIM, Min Cheol, 34124 Daejeon (KR); PARK, Soo Bin, 34124 Daejeon (KR); IM, Jong Chan, 34124 Daejeon (KR); JO, Yoon Ji, 34124 Daejeon (KR)
(74) Representative: Stolmár & Partner Patentanwälte PartG mbB

(57) **Abstract**

A pouch film for a secondary battery according to exemplary embodiments of the present disclosure includes a substrate layer, a stretched layer formed on the substrate layer, a metal layer formed on the stretched layer, and a sealant layer formed on the metal layer. The pouch film further includes an impact-resistant layer including a shear thickening fluid at least at one of positions between the substrate layer and the stretched layer, between the stretched layer and the metal layer, and between the metal layer and the sealant layer.

## Description

### [BACKGROUND OF THE INVENTION]

### 1. Field of the Invention

The present disclosure relates to a pouch film for a secondary battery and a secondary battery including the pouch film.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickel-cadmium battery, and a nickel-hydrogen battery. Among these, the lithium secondary battery has been actively developed and applied due to its high operating voltage, high energy density per unit weight, and advantages in charging speed and weight reduction.

The lithium secondary battery may include an electrode assembly including a cathode, an anode, and a separator, and an electrolyte for impregnating the electrode assembly. The electrode assembly and electrolyte may be accommodated in an outer case, for example, a pouch type outer case.

Pouch batteries are lighter and offer greater freedom with respect to packing space compared to prismatic or cylindrical batteries. However, since their impact resistance is weaker than that of the prismatic or cylindrical batteries, the development of a pouch film to compensate for the same is required.

### [SUMMARY OF THE INVENTION]

An object of the present disclosure is to provide a pouch film for a secondary battery having improved stability.

Another object of the present disclosure is to provide a secondary battery including the pouch film.

A pouch film for a secondary battery according to exemplary embodiments of the present disclosure includes: a substrate layer; a stretched layer formed on the substrate layer; a metal layer formed on the stretched layer; and a sealant layer formed on the metal layer. The pouch film further includes an impact-resistant layer including a shear thickening fluid at least at one of positions between the substrate layer and the stretched layer, between the stretched layer and the metal layer, and between the metal layer and the sealant layer.

In exemplary embodiments, the impact-resistant layer may be formed between the substrate layer and the stretched layer, between the stretched layer and the metal layer, and between the metal layer and the sealant layer.

In exemplary embodiments, the shear thickening fluid may include oobleck.

In exemplary embodiments, the oobleck may include starch and water.

In exemplary embodiments, the starch and water may be included in a ratio of 1:10 to 10:1 based on mass.

In exemplary embodiments, the impact-resistant layer may further include nanosilica and/or aramid fibers.

In exemplary embodiments, the nanosilica may be included in an amount of 1% by weight to 20% by weight based on the weight of the impact-resistant layer.

In exemplary embodiments, the aramid fibers may be included in an amount of 1% by weight to 20% by weight based on the weight of the impact-resistant layer.

In exemplary embodiments, the impact-resistant layer may have a thickness of 5 µm to 50 µm.

In exemplary embodiments, the pouch film may further include a pressure-sensitive adhesive layer disposed between the respective layers.

A secondary battery according to exemplary embodiments of the present disclosure includes: an electrode assembly including cathodes and anodes alternately arranged; and a pouch formed of the above-described pouch film for a secondary battery that accommodates the electrode assembly.

The pouch film for a secondary battery according to the exemplary embodiments of the present disclosure may include an impact-resistant layer including a shear thickening fluid. Accordingly, the impact resistance of the secondary battery may be improved, thereby protecting the secondary battery from external impacts and from impacts caused by internal explosions.

A secondary battery including a pouch formed of the pouch film of the present disclosure may be widely applied in green technology fields including electric vehicles, battery charging stations, and renewable energy systems using batteries, such as photovoltaics and wind power generation. In addition, a lithium secondary battery including a pouch formed of the pouch film of the present disclosure may be used in eco-friendly electric vehicles and hybrid vehicles to suppress air pollution and greenhouse gas emissions, thereby contributing to mitigating climate change.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a schematic view illustrating the laminated structure of a pouch film according to exemplary embodiments; and
FIGS. 2 and 3 are a plan view and a cross-sectional view, respectively, illustrating a secondary battery according to exemplary embodiments.

### [DETAILED DESCRIPTION OF THE INVENTION]

A pouch film for a secondary battery according to exemplary embodiments of the present disclosure (hereinafter, also abbreviated as "pouch film") has an impact-resistant layer optionally formed between the respective layers.

The exemplary embodiments will now be described in more detail with reference to the accompanying drawings. However, the drawings and embodiments included in the present specification are merely intended to facilitate understanding of the technical spirit of the present disclosure. Accordingly, the present disclosure should not be construed as being limited to the matters described in the drawings and the embodiments.

The terms "upper portion," "lower portion," "upper surface," "lower surface," "first," and "second" as used herein do not designate absolute positions, but are used in a relative sense. For example, such terms are used to designate different directions with respect to a specific structure.

The terms "inner side" and "outer side" as used herein do not designate absolute directions, but are used in a relative sense. For example, the terms are used relatively to designate different directions for a specific structure.

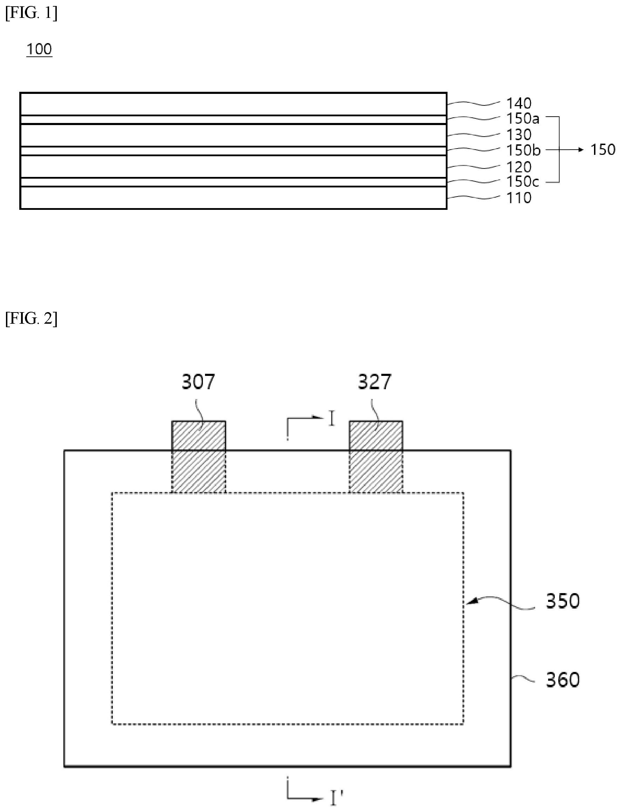

FIG. 1 is a schematic view illustrating the laminated structure of a pouch film according to exemplary embodiments.

Referring to FIG. 1, a pouch film 100 may include a structure in which a substrate layer 110, a stretched layer 120, a metal layer 130, and a sealant layer 140 are laminated in this order.

In exemplary embodiments, the substrate layer 110 may be formed on an outer surface of the pouch film 100 to protect the secondary battery from friction and impacts from the outside. For example, the substrate layer 110 may be formed on a surface of the pouch film 100 that does not directly face an electrode assembly 350 when the pouch film 100 accommodates the electrode assembly 350.

In exemplary embodiments, the substrate layer 110 may be made of a polymer and may electrically isolate the electrode assembly accommodated in the pouch to be described below from the outside.

For example, the polymer may include polyethylene (PE), polypropylene (PP), polycarbonate (PC), polyethylene terephthalate (PET), polyvinyl chloride (PVC), acrylic-based polymer, polyacrylonitrile (PAN), polyimide (PI), polyamide (PA), cellulose, aramid, nylon, polyester, poly-p-phenylenebenzobisoxazole (PBO), polyarylate (PAR), Teflon, glass fiber, and the like. These may have a single-layer structure formed of a single material or a composite-layer structure formed by two or more materials forming separate layers. Accordingly, the abrasion resistance, heat resistance, and insulation properties of the pouch film 100 may be improved.

For example, the substrate layer 110 may include polyethylene terephthalate. Accordingly, the durability and insulation properties of the pouch film 100 may be improved.

In exemplary embodiments, the substrate layer 110 may have a thickness of 1 µm to 100 µm, 3 µm to 80 µm, or 5 µm to 50 µm. Within this range, a decrease in the abrasion resistance, heat resistance, and insulation properties of the pouch film 100 and a decrease in the energy density per unit volume of the secondary battery may be prevented.

In exemplary embodiments, the stretched layer 120 may be formed on the substrate layer 110 to improve the stretchability of the pouch film 100.

The stretched layer 120 may include polyethylene, polypropylene, polycarbonate, polyethylene terephthalate, polyvinyl chloride, acrylic-based polymer, polyacrylonitrile, polyimide, polyamide, cellulose, aramid, nylon, polyester, poly-p-phenylenebenzobisoxazole, polyarylate, Teflon, glass fiber, and the like. These may have a single-layer structure formed of a single material or a composite-layer structure formed by two or more materials forming separate layers.

For example, the stretched layer 120 may include nylon. Accordingly, the moldability and insulation properties of the pouch film may be improved.

In exemplary embodiments, the stretched layer 120 may have a thickness of 1 µm to 30 µm, 5 µm to 25 µm, or 10 µm to 20 µm. Within this range, it is possible to prevent a decrease in the abrasion resistance, heat resistance, and insulation properties of the pouch film 100 and a decrease in the energy density per unit volume of the secondary battery.

In exemplary embodiments, the metal layer 130 may be formed on an upper portion of the stretched layer 120 to secure the mechanical strength of the pouch film 100, block the entry and exit of external elements (e.g., gas, moisture, etc.), and prevent leakage of an electrolyte from the electrode assembly accommodated inside the pouch to be described below.

The metal layer 130 may include a metal, for example, an aluminum (Al) alloy. Accordingly, the pouch film 100 having improved mechanical strength, heat resistance, and insulation properties while being lightweight may be provided.

The aluminum alloy may further include elements other than aluminum, for example, iron (Fe), copper (Cu), chromium (Cr), manganese (Mn), nickel (Ni), magnesium (Mg), silicon (Si), zinc (Zn), or the like. The content of elements other than aluminum included in the aluminum alloy may be 0.5% by weight ("wt%") to 2.0 wt%, 0.7 wt% to 1.8 wt%, or 1.0 wt% to 1.5 wt%. Within this range, the mechanical strength, moldability, and blocking effect of external elements of the aluminum alloy may be improved.

In exemplary embodiments, the metal layer 130 may have a thickness of 20 µm to 100 µm, 25 µm to 80 µm, 30 µm to 60 µm, or 40 µm to 50 µm. Within this range, it is possible to prevent a decrease in the energy density per unit volume of the secondary battery while preventing a decrease in the sealing durability of the pouch film.

In exemplary embodiments, the sealant layer 140 may be formed on an inner surface of the pouch film 100. For example, the sealant layer 140 may be formed on a surface of the pouch film 100 that directly faces the electrode assembly 350 when the pouch film 100 accommodates the electrode assembly 350.

In exemplary embodiments, the sealant layer 140 may include a thermally polymerizable compound. Accordingly, when heat treatment is performed while the sealant layer 140 is in contact with another layer, the contact portion may be strongly bonded and sealed by the polymerization or crosslinking reaction of the thermally polymerizable compound.

The sealant layer 140 may include polyethylene, polypropylene, polycarbonate, polyethylene terephthalate, polyvinyl chloride, acrylic-based polymer, polyacrylonitrile, polyimide, polyamide, cellulose, aramid, nylon, polyester, poly-p-phenylenebenzobisoxazole, polyarylate, Teflon, glass fiber, and the like. These may have a single-layer structure formed of a single material or a composite-layer structure formed by two or more materials forming separate layers.

For example, the sealant layer 140 may include a polyolefin resin such as polyethylene and polypropylene. Accordingly, the mechanical strength and chemical strength of the sealant layer may be improved.

The polyolefin resin may include an acid-modified polyolefin resin, for example, maleic anhydride grafted polypropylene (MAH-g-PP). Accordingly, the adhesion to the metal layer 130 may be improved.

In some embodiments, the sealant layer 140 may be a composite film of polypropylene and acid-modified polypropylene. The polypropylene may have excellent processability and moldability, thereby facilitating the sealing of the pouch film. The acid-modified polypropylene may have excellent adhesion, particularly adhesion to metal, which allows for stable adhesion between the sealant layer 140 and the metal layer 130, thereby enhancing the durability and reliability of the pouch film 100.

In some embodiments, the sealant layer 140 may have a thickness of 50 µm to 100 µm, 60 µm to 90 µm, or 70 µm to 80 µm. Within this range, a decrease in sealing durability and a decrease in the energy density per unit volume of the secondary battery may be prevented.

Referring to FIG. 1, an impact-resistant layer 150 may optionally be further formed between the respective layers. For example, impact-resistant layers 150a, 150b and 150c may be formed at least at one of positions between the substrate layer 110 and the stretched layer 120, between the stretched layer 120 and the metal layer 130, or between the metal layer 130 and the sealant layer 140. Accordingly, the impact resistance of the secondary battery may be improved, thereby protecting the electrode assembly 350 accommodated therein from external impacts. In addition, when an explosion occurs inside the pouch, the propagation of impact to other cells may be suppressed.

In exemplary embodiments, the impact-resistant layers 150a, 150b, and 150c may all be formed between the substrate layer 110 and the stretched layer 120, between the stretched layer 120 and the metal layer 130, and between the metal layer 130 and the sealant layer 140. When the impact-resistant layers are disposed only on the outer and/or inner surfaces of the pouch film 100 instead of between the respective layers of the pouch film 100, the impact resistance of the secondary battery may not be sufficiently improved.

The impact-resistant layer 150 may include a shear thickening fluid. For example, the shear thickening fluid may include oobleck, or the like. Accordingly, the impact-resistant layer 150 may have the characteristics of a non-Newtonian fluid, thereby further improving the impact resistance of the secondary battery.

In exemplary embodiments, the oobleck may include starch and water. For example, the oobleck may include starch and water in a ratio of 1:10 to 10:1, 1:9 to 9:1, 1:8 to 8:1, 1:7 to 7:1, 1:6 to 6:1, or 1:5 to 5:1 based on mass.

In exemplary embodiments, the impact-resistant layer 150 may further include nanosilica, aramid fibers, or the like. Accordingly, the impact resistance of the secondary battery may be further improved.

For example, the nanosilica may be included in an amount of 1 wt% to 20 wt%, 1 wt% to 15 wt%, or 1 wt% to 10 wt% based on the weight of the impact-resistant layer 150.

For example, the aramid fibers may be included in an amount of 1 wt% to 20 wt%, 1 wt% to 15 wt%, or 1 wt% to 10 wt% based on the weight of the impact-resistant layer 150.

In exemplary embodiments, the impact-resistant layer 150 may have a thickness of 5 µm to 50 µm, 7 µm to 40 µm, or 10 µm to 30 µm. Within this range, it is possible to prevent a decrease in the energy density per unit volume of the secondary battery while preventing a decrease in the impact resistance of the secondary battery.

In exemplary embodiments, the impact-resistant layer 150 may further include a polymer such as polyurethane, ethylene acrylic acid (EAA), polyamide, and polypropylene. Accordingly, adhesion may be imparted to the impact-resistant layer.

In exemplary embodiments, the impact-resistant layer 150 may be accommodated inside a membrane made of polyethylene terephthalate (PET), polypropylene, or the like. Accordingly, the impact-resistant layer corresponding to a fluid layer may be fixed inside the pouch.

In exemplary embodiments, the impact-resistant layer 150 may be additionally disposed on the outer and/or inner surfaces of the pouch film 100.

In exemplary embodiments, the impact-resistant layer 150 may not be disposed on the outer surface of the pouch film 100. In exemplary embodiments, the impact-resistant layer 150 may not be disposed on the inner surface of the pouch film 100. Accordingly, a decrease in the energy density per unit volume of the secondary battery may be prevented.

In exemplary embodiments, the pouch film 100 may further include a pressure-sensitive adhesive layer for bonding each layer. For example, the pressure-sensitive adhesive layer may be formed between the stretched layer 120 and the metal layer 130, and may be formed between the stretched layer 120 and the substrate layer 110.

The pressure-sensitive adhesive layer is not particularly limited as long as it can impart adhesion between the respective layers, and may include, for example, polyacrylate.

In exemplary embodiments, the pressure-sensitive adhesive layer may have a thickness of 1 µm to 10 µm, 1 µm to 8 µm, or 1 µm to 5 µm. Within this range, each layer of the pouch film may be stably laminated without reducing the energy density per unit volume of the secondary battery.

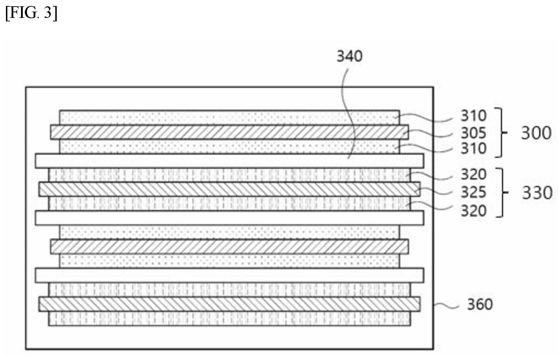

FIGS. 2 and 3 are a schematic plan view and a cross-sectional view, respectively, illustrating a secondary battery according to exemplary embodiments. For example, FIG. 3 is a cross-sectional view taken along line I-I' of FIG. 2 in a thickness direction.

The secondary battery shown in FIGS. 2 and 3 is schematically illustrated for convenience of description, and the structure of the secondary battery of the present disclosure is not limited to the structure shown in FIGS. 2 and 3.

According to exemplary embodiments, a unit cell is defined by a cathode 300, an anode 330 and a separator 340, and a plurality of unit cells may be stacked to form, for example, the electrode assembly 350.

The cathode 300 may include a cathode current collector 305 and a cathode active material layer 310 formed by applying a cathode active material on the cathode current collector 305. The cathode active material may include a compound capable of reversibly intercalating and deintercalating lithium ions. In this case, the secondary battery may be provided as a lithium secondary battery.

In exemplary embodiments, the cathode active material may include lithium-transition metal composite oxide particles. For example, the lithium-transition metal composite oxide particles may include nickel (Ni), and may further include at least one of cobalt (Co) and manganese (Mn).

For example, the cathode current collector 305 may include stainless steel, nickel, aluminum, titanium, copper, zinc, or an alloy thereof, and preferably includes aluminum or an aluminum alloy.

For example, the cathode active material may be mixed and stirred with a binder, a conductive material, and/or a dispersant in a solvent to prepare a slurry. The slurry may be coated on the cathode current collector 305, then dried and compressed to prepare the cathode 300 including the cathode active material layer 310.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as the cathode binder. In this case, the amount of the binder for forming the cathode active material layer may be reduced and the amount of the cathode active material may be relatively increased, thereby improving the output and capacity of the secondary battery.

The conductive material may be included to promote electron migration between the active material particles. For example, the conductive material may include carbon-based conductive materials such as graphite, carbon black, graphene, or carbon nanotubes and/or metal-based conductive materials such as tin, tin oxide, and titanium oxide; as well as perovskite materials such as LaSrCoO₃, and LaSrMnO₃, etc.

The anode 330 may include the anode current collector 325 and the anode active material layer 320 formed by coating the anode active material onto the anode current collector 325.

As the anode active material, any active material known in the art may be used, so long as it is capable of absorbing and releasing lithium ions, without particular limitation. For example, carbon-based materials such as crystalline carbon, amorphous carbon, carbon composite, carbon fibers, etc., a lithium alloy, or a silicon (Si)-based active material may be used. Examples of the amorphous carbon may include hard carbon, coke, mesocarbon microbeads (MCMB), mesophase pitch-based carbon fibers (MPCF), or the like.

Examples of the crystalline carbon may include graphite-based carbon such as natural graphite, artificial graphite, graphitized coke, graphitized MCMB, graphitized MPCF or the like. Elements contained in the lithium alloy may include aluminum, zinc, bismuth, cadmium, antimony, silicon, lead, tin, gallium or indium or the like.

The anode current collector 325 may include stainless steel, copper, nickel, aluminum, titanium, or an alloy thereof. Preferably, the anode current collector 325 includes copper or a copper alloy.

For example, a slurry may be prepared by mixing the anode active material with the above-described binder, conductive material, thickener, and the like in a solvent, followed by stirring. The slurry may be coated on at least one surface of the anode current collector 325, followed by drying and compression to prepare the anode 330 including the anode active material layer 320.

As the binder and the conductive material, materials which are substantially the same as or similar to the above-described materials used in the cathode active material layer 310 may be used. In some embodiments, a binder for forming an anode may include, for example, an aqueous binder such as styrene-butadiene rubber (SBR) to ensure compatibility with the carbon-based active material, and may be used together with a thickener such as carboxymethyl cellulose (CMC).

The separator 340 may be interposed between the cathode 300 and the anode 330. The separator 340 may include a porous polymer film made of a polyolefin polymer such as ethylene homopolymer, propylene homopolymer, ethylene/butene copolymer, ethylene/hexene copolymer, or ethylene/methacrylate copolymer. The separator 340 may include a nonwoven fabric made of glass fibers having a high melting point, polyethylene terephthalate fibers, etc.

According to exemplary embodiments, the cathode 300 and the anode 330 may be alternately and repeatedly stacked with the separator 340 interposed therebetween, thereby defining the electrode assembly 350.

The electrode assembly 350 may be a winding type, a stacking type, a z-folding type, or a stacked-folding type.

The electrode assembly 350 may be accommodated in a case 360 made of the above-described pouch film together with an electrolyte to define a secondary battery. According to exemplary embodiments, a non-aqueous electrolyte may be used as the electrolyte.

The non-aqueous electrolyte may include a lithium salt as an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the like may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, γ-butyrolactone, propylene sulfite and tetrahydrofuran, and the like may be used. These may be used alone or in combination of two or more thereof.

As shown in FIG. 2, electrode tabs (cathode tabs and anode tabs) may be formed from the cathode current collector 305 and the anode current collector 325, each belonging to a respective electrode cell, and may extend to one side of the case 360. The electrode tabs may be welded together with the one side of the case 360 to form electrode leads (a cathode lead 307 and an anode lead 327) that extend from or are exposed to the outside of the case 360.

In FIG. 2, the cathode lead 307 and the anode lead 327 are shown to protrude from an upper side of the case 360 in a planar direction, but positions of these electrode leads are not limited thereto. For example, the electrode leads may protrude from at least one of both sides of the case 360, or may protrude from a lower side of the case 360. Alternatively, the cathode lead 307 and the anode lead 327 may be formed to protrude from different sides of the case 360, respectively.

As the secondary battery according to exemplary embodiments of the present disclosure includes the above-described electrode assembly 350 and the above-described pouch film, the impact resistance thereof may be improved.

The invention relates also to the following numbered aspects:
Aspect 1.A pouch film for a secondary battery comprising:
   a substrate layer;
   a stretched layer formed on the substrate layer;
   a metal layer formed on the stretched layer; and
   a sealant layer formed on the metal layer, and
   wherein the pouch film further comprises an impact-resistant layer including a shear thickening fluid at least at one of positions between the substrate layer and the stretched layer, between the stretched layer and the metal layer, and between the metal layer and the sealant layer.
Aspect 2. The pouch film for a secondary battery according to aspect 1, wherein the impact-resistant layer is formed between the substrate layer and the stretched layer, between the stretched layer and the metal layer, and between the metal layer and the sealant layer.
Aspect 3. The pouch film for a secondary battery according to aspect 1 or 2, wherein the shear thickening fluid comprises oobleck.
Aspect 4. The pouch film for a secondary battery according to aspect 3, wherein the oobleck comprises starch and water.
Aspect 5. The pouch film for a secondary battery according to aspect 4, wherein the starch and water are included in a ratio of 1:10 to 10:1 based on mass.
Aspect 6.The pouch film for a secondary battery according to any one of aspects 1 to 5, wherein the impact-resistant layer further comprises nanosilica and/or aramid fibers.
Aspect 7. The pouch film for a secondary battery according to aspect 6, wherein the nanosilica is included in an amount of 1% by weight to 20% by weight based on the weight of the impact-resistant layer.
Aspect 8.The pouch film for a secondary battery according to aspect 6 or 7, wherein the aramid fibers are included in an amount of 1% by weight to 20% by weight based on the weight of the impact-resistant layer.
Aspect 9.The pouch film for a secondary battery according to any one of aspects 1 to 8, wherein the impact-resistant layer has a thickness of 5 µm to 50 µm.
Aspect 10. The pouch film for a secondary battery according to any one of aspects 1 to 9, further comprising a pressure-sensitive adhesive layer disposed between the respective layers.
Aspect 11. A secondary battery comprising:
   an electrode assembly comprising cathodes and anodes alternately arranged; and
   a pouch formed of the pouch film for a secondary battery according to any one of aspects 1 to 10 that accommodates the electrode assembly.

### Example 1

### 1) Preparation of Oobleck

Starch and water were mixed in a ratio of 1:2 based on mass to prepare oobleck.

### 2) Preparation of Pouch Film

A pouch film was prepared by sequentially laminating and pressing a polypropylene (PP) layer (thickness: 40 µm), an aluminum (Al) layer (thickness: 40 µm), a pressure-sensitive adhesive layer (thickness: 2 µm), a nylon layer (thickness: 20 µm), a pressure-sensitive adhesive layer (thickness: 2 µm), an oobleck layer (thickness: 20 µm), a pressure-sensitive adhesive layer (thickness: 2 µm), and a polyethylene terephthalate (PET) film (thickness: 12 µm).

### 3) Manufacture of Secondary Battery

A cathode slurry was prepared by mixing LiNi_{0.8}Co_{0.1}Mn_{0.1}O₂ as a cathode active material, carbon black as a conductive material, and polyvinylidene fluoride (PVDF) as a binder in a mass ratio of 95:3:2. The cathode slurry was coated onto an aluminum substrate, and then dried and roll-pressed to form a cathode active material layer (120 µm).

An anode slurry was prepared using 92 wt% artificial graphite as an anode active material, 2 wt% styrene-butadiene rubber (SBR)-based binder, 1 wt% CMC as a thickener, and 5 wt% flake-type amorphous graphite as a conductive material. The anode slurry was coated onto a copper substrate, and then dried and pressed to form an anode active material layer (140 µm).

The prepared cathodes and anodes were arranged with a polyethylene (PE) separator (15 µm) interposed therebetween to form electrode cells, and the electrode cells were stacked to form an electrode assembly, after which the tab portions of the cathode and anode were welded, respectively.

The electrode assembly was placed in a pouch formed of the pouch film, and three sides of the pouch were sealed, leaving one side open for electrolyte injection. At this time, the portion having the electrode tab was included in the sealed portion. After injecting an electrolyte through the electrolyte injection side, the remaining electrolyte injection side was also sealed, and the cell was allowed to be impregnated for 12 hours or more to manufacture a lithium secondary battery sample.

### Example 2

A pouch film was prepared in the same manner as in Example 1, except that a polypropylene (PP) layer (thickness: 40 µm), an aluminum (Al) layer (thickness: 40 µm), a pressure-sensitive adhesive layer (thickness: 2 µm), an oobleck layer (thickness: 20 µm), a pressure-sensitive adhesive layer (thickness: 2 µm), a nylon layer (thickness: 20 µm), a pressure-sensitive adhesive layer (thickness: 2 µm), and a polyethylene terephthalate (PET) film (thickness: 12 µm) were sequentially laminated and pressed.

### Examples 3 to 5

Lithium secondary battery samples were manufactured in the same manner as in Example 1, except that the oobleck layers were used with thicknesses of 25 µm, 15 µm, and 10 µm, respectively.

The positions and thicknesses of the oobleck layers in the above examples are shown in Table 1 below.

**[TABLE 1]**

| | Position of oobleck layer | Thickness of oobleck layer |
|---|---|---|
| Example 1 | Between the nylon layer and the PET film | 20 |
| Example 2 | Between the aluminum (Al) layer and the nylon layer | 20 |
| Example 3 | Between the nylon layer and the PET film | 25 |
| Example 4 | Between the nylon layer and the PET film | 15 |
| Example 5 | Between the nylon layer and the PET film | 10 |

### Comparative Example 1

A lithium secondary battery sample was manufactured in the same manner as in Example 1, except that a pouch film was prepared by laminating a polyethylene terephthalate (PET) film (thickness: 12 µm) and then laminating an oobleck layer (thickness: 20 µm) on the outer surface of the pouch film.

### Comparative Example 2

A lithium secondary battery sample was manufactured in the same manner as in Example 1, except that a pouch film that did not include an oobleck layer was prepared.

### Experimental Example 1: SLED Test

After charging the lithium secondary battery samples of the examples and comparative examples to an SOC of 50%, an SLED test was performed.

The SLED test was performed by applying an impact of 60 G (G denotes gravitational acceleration) for 45 ms to the lithium secondary battery samples of the examples and comparative examples charged to an SOC of 50%.

### (1) Voltage

The voltage change of the lithium secondary battery samples was measured after applying an impact.
No variation: No difference from the original voltage
Voltage drop: A change of more than 100 mV from the original voltage

### (2) Riso (MΩ)

The insulation resistance of the lithium secondary battery samples was measured after applying an impact.
Pass: 4000 MΩ or more
Fail: Less than 4000 MΩ

### Experimental Example 2: Safety Evaluation (Drop)

To measure the safety of the batteries, the lithium secondary battery samples of the examples and comparative examples were dropped from a height of 1 m to apply physical impact to the secondary batteries and check for damage, and were classified as follows:

Preserved: No significant difference in overall appearance before and after the application of impact.

Good: External physical damage occurred without electrolyte leakage or smoke generation.

Broken: Smoke generation or electrolyte leakage occurred due to an internal short circuit caused by physical damage to the battery.

The results of the SLED test and the safety evaluation are shown in Table 2 below.

**[TABLE 2]**

| | SLED test | | Safety evaluation (drop) |
|---|---|---|---|
| | Voltage | Riso (MΩ) | |
| Example 1 | No variation | Pass | Preserved |
| Example 2 | No variation | Pass | Preserved |
| Example 3 | No variation | Pass | Preserved |
| Example 4 | No variation | Pass | Good |
| Example 5 | Voltage drop | Fail | Good |
| Comparative Example 1 | Voltage drop | Fail | Broken |
| Comparative Example 2 | Voltage drop | Fail | Broken |

Referring to Table 2, the secondary batteries of the examples in which a 20 µm thick oobleck layer was disposed inside the pouch had superior performance in the SLED test compared to the secondary batteries of Comparative Example 1, in which a 15 µm or more thick oobleck layer was disposed on the outer surface of the pouch, and Comparative Example 2, in which no oobleck layer was included.

In addition, in the case of examples in which the thickness of the oobleck layer was 20 µm or more, the performance in the SLED test was superior.

## Claims

1. A pouch film for a secondary battery comprising:
a substrate layer;
a stretched layer formed on the substrate layer;
a metal layer formed on the stretched layer; and
a sealant layer formed on the metal layer, and
wherein the pouch film further comprises an impact-resistant layer including a shear thickening fluid at least at one of positions between the substrate layer and the stretched layer, between the stretched layer and the metal layer, and between the metal layer and the sealant layer.

2. The pouch film for a secondary battery according to claim 1, wherein the impact-resistant layer is formed between the substrate layer and the stretched layer, between the stretched layer and the metal layer, and between the metal layer and the sealant layer.

3. The pouch film for a secondary battery according to claim 1 or 2, wherein the shear thickening fluid comprises oobleck.

4. The pouch film for a secondary battery according to claim 3, wherein the oobleck comprises starch and water.

5. The pouch film for a secondary battery according to claim 4, wherein the starch and water are included in a ratio of 1:10 to 10:1 based on mass.

6. The pouch film for a secondary battery according to any one of claims 1 to 5, wherein the impact-resistant layer further comprises nanosilica and/or aramid fibers.

7. The pouch film for a secondary battery according to claim 6, wherein the nanosilica is included in an amount of 1% by weight to 20% by weight based on the weight of the impact-resistant layer.

8. The pouch film for a secondary battery according to claim 6 or 7, wherein the aramid fibers are included in an amount of 1% by weight to 20% by weight based on the weight of the impact-resistant layer.

9. The pouch film for a secondary battery according to any one of claims 1 to 8, wherein the impact-resistant layer has a thickness of 5 µm to 50 µm.

10. The pouch film for a secondary battery according to any one of claims 1 to 9, further comprising a pressure-sensitive adhesive layer disposed between the respective layers.

11. A secondary battery comprising:
an electrode assembly comprising cathodes and anodes alternately arranged; and
a pouch formed of the pouch film for a secondary battery according to any one of claims 1 to 10 that accommodates the electrode assembly.
